# EUROPEAN PATENT APPLICATION

(11) **EP 4 393 356 A1**
(43) Date of publication of application: **03.07.2024**
(21) Application number: 23213061.7
(22) Date of filing: 29.11.2023
(51) Int. Cl.: A47J 31/18, A47J 31/40

(54) **A COFFEE MAKER WITH AUTOMATIC DOSING FUNCTION**

(30) Priority: 29.12.2022 TR 202221250
(71) Applicant: Arçelik Anonim Sirketi, 34445 Istanbul (TR)
(72) Inventor: KAYISDAG, Varol, 34445 Istanbul (TR); BERKAN, Cevdet Mumtaz, 34445 Istanbul (TR); GOZEL, Suheyla, 34445 Istanbul (TR); EDIS, Kutay, 34445 Istanbul (TR); SARITOPRAK, Burak, 34445 Istanbul (TR)

(57) **Abstract**

The present invention relates to a coffee maker (1) comprising a body (2); a dosing compartment (3) which is disposed in the body (2); a coffee receptacle (4) which is disposed in the dosing compartment (3) and which is suitable for loading coffee; a brewing chamber (5) which is disposed in the body (2) and wherein the brewing process is performed; a transfer opening (6) which allows foodstuff transfer between the dosing compartment (3) and the brewing chamber (5); and a control unit (7) which controls the operation.

## Description

The present invention relates to a coffee maker with automatic dosing function.

Since in coffee makers where coffee and sugar are added to the brewing pot by the user, the amount of coffee to be brewed is measured manually by the user, inconsistencies may occur in the amount of coffee and sugar. Moreover, adjusting the appropriate amount of coffee and sugar causes waste of time. In beverages prepared in fully automatic coffee makers, coffee and sugar are stored in receptacles. In an automatic coffee maker, coffee and optionally sugar should be automatically transferred to the brewing chamber where the brewing process is performed. In the state of the art coffee makers, many problems arise due to said transfer. One of these is that since the coffee and sugar are stored above the brewing chamber, the steam generated during the brewing process reaches the coffee and sugar receptacle, causing the coffee to go stale and the sugar to harden. In coffee makers where coffee and sugar are transferred with water, wet coffee and sugar may cause the coffee to become moldy and the sugar to harden.

In the state of the art United States Patent Application No. US20170258262A1, an automatic coffee maker is disclosed.

The aim of the present invention is the realization of a coffee maker wherein the coffee dosed by means of a dosing mechanism is enabled to be automatically transferred to the brewing chamber.

The coffee maker of the present invention comprises a body; a dosing compartment which is disposed in the body; a coffee receptacle which is disposed in the dosing compartment and which is suitable for loading coffee; a brewing chamber which is disposed in the body and wherein the brewing process is performed; a transfer opening which allows foodstuff transfer between the dosing compartment and the brewing chamber; and a control unit which controls the operation. The coffee maker further comprises a transfer receptacle which is disposed in the dosing compartment and which is suitable for receiving the amount of coffee determined by the user from the coffee receptacle by means of a first dosing mechanism; and a movement mechanism which enables said transfer receptacle to be brought to a transfer position where it is possible to transfer the coffee in the transfer receptacle to the brewing chamber through the transfer opening. The control unit controls the first dosing mechanism and the movement mechanism. The control unit determines an appropriate amount of coffee according to the amount of coffee requested by the user by activating the first dosing mechanism. The coffee transferred from the first dosing mechanism to the transfer receptacle is transferred to the brewing chamber through the transfer opening as the movement mechanism brings the transfer receptacle to the transfer position. Thus, the amount of coffee appropriate to the amount of coffee requested by the user is automatically transferred to the brewing chamber. Consequently, the optimum amount of coffee is determined, transferred to the brewing chamber and brewed. Since the user does not need to manually adjust the coffee dosage, loss of time is prevented.

In an embodiment of the present invention, the coffee maker comprises a lid which is suitable to be moved between a closed position wherein the lid closes the transfer opening and an open position wherein the lid allows foodstuff transfer between the dosing compartment and the brewing chamber through said transfer opening. In the preferred version of the present invention, the lid is in the open position only when the transfer receptacle is in the transfer position. The lid is in the closed position during the brewing process. Thus, steam and moisture released during the brewing process are prevented from entering the dosing compartment. Consequently, the economic life of the foodstuffs in the dosing compartment is extended.

In an embodiment of the present invention, while moving the transfer receptacle to the transfer position, the movement mechanism enables the lid to be moved from the closed position to the open position. Thus, when the transfer receptacle is brought to the transfer position, the lid is brought to the open position. The lid is moved from the closed position to the open position in the direction of moving the transfer receptacle from the initial position to the transfer position. If the lid is already in the open position while the transfer receptacle is being brought to the transfer position, the lid is prevented from shifting to the closed position.

In an embodiment of the present invention, the coffee maker comprises a flexible member which is connected to the lid and which applies force to the lid such that the lid is brought to the closed position when the lid is in the open position. Thus, when no mechanical force is applied to the lid by the transfer receptacle or the movement mechanism, the lid remains in the closed position. In a preferred version of the present invention, the flexible member is a spring.

In an embodiment of the present invention, the coffee maker comprises a sugar receptacle which is disposed in the dosing compartment, which is suitable for receiving sugar, and which enables the amount of sugar determined by the user to be transferred to the transfer receptacle by means of a second dosing mechanism. Thus, the amount of sugar to be added into the coffee is automatically dosed.

In an embodiment of the present invention, the movement mechanism comprises an electric motor. The energy which enables the movement mechanism to move the transfer receptacle is provided by the electric motor. The rotational axis of the electric motor can be in a depth direction perpendicular to both the vertical plane and the horizontal plane.

In an embodiment of the present invention, the movement mechanism comprises a first movement arm one end of which is connected to the electric motor and the other end to the transfer receptacle, which enables the transfer receptacle to be moved in the dosing compartment with the rotation of the electric motor. By means of said movement mechanism, the transfer receptacle can be moved in both directions in the horizontal plane. By changing the direction of the rotation of the electric motor, the direction the transfer receptacle moves in the horizontal plane can be changed. An opening is provided on the upper surface of the transfer receptacle facing the coffee receptacle. An opening is provided on the lower surface opposite said upper surface, facing the base of the dosing compartment. Coffee and/or sugar is/are transferred into the transfer receptacle through the opening on the upper surface of the transfer receptacle. When the transfer receptacle is in the transfer position, the opening on the lower surface thereof and the transfer opening are aligned. Thus, the coffee and/or sugar in the transfer receptacle is/are transferred to the brewing chamber.

In another embodiment of the present invention, the movement mechanism comprises a first gearwheel which is connected to the electric motor and which is suitable for rotational movement when the electric motor is started; a threaded rod which is connected to the first gearwheel and which is suitable to be moved in a horizontal plane within the dosing compartment by the rotation of the first gearwheel; and a transfer arm one end of which is connected to the transfer receptacle and the other end to the threaded rod and which enables the transfer receptacle together with the threaded rod to be moved in the horizontal plane. By changing the direction of the rotation of the electric motor, the direction the transfer receptacle moves in the horizontal plane can be changed. An opening is provided on the upper surface of the transfer receptacle facing the coffee receptacle. An opening is provided on the lower surface opposite said upper surface, facing the base of the dosing compartment. Coffee and/or sugar is/are transferred into the transfer receptacle through the opening on the upper surface of the transfer receptacle. When the transfer receptacle is in the transfer position, the opening on the lower surface thereof and the transfer opening are aligned. Thus, the coffee and/or sugar in the transfer receptacle is/are transferred to the brewing chamber.

In an embodiment of the present invention, the movement mechanism comprises a second movement arm one end of which is connected to the electric motor and which is suitable to be moved in a horizontal plane in the dosing compartment by the rotation of the electric motor; a second gearwheel which is disposed at the other end of the second movement arm and which is suitable for rotational movement in the dosing compartment; a threaded surface which is fixed in the dosing compartment and which is suitable for rotating the second gearwheel thereon; and a connection means one end of which is connected to the transfer receptacle and the other end to the second gearwheel and which enables the transfer receptacle together with the second gearwheel to be rotated around its own axis and moved in the horizontal plane. Thus, the transfer receptacle can be rotated around its own axis and moved to ensure displacement in the horizontal plane.

In an embodiment of the present invention, the coffee maker comprises a guiding means which provides guidance for the movement of the transfer receptacle and/or the lid in the dosing compartment. Thus, the movement of the transfer receptacle between the initial position and the transfer position is guided. Moreover, the movement of the lid between the closed position and the open position is also guided.

In an embodiment of the present invention, the coffee maker comprises at least two brewing chambers. Thus, it is possible to cook a larger amount of coffee at the same time.

In an embodiment of the present invention, the coffee maker is a Turkish coffee maker.

The coffee maker realized in order to attain the aim of the present invention is illustrated in the attached figures, where:
Figure 1 - is the perspective view of the coffee maker and the dosing compartment when the lids are in the closed position related to an embodiment of the present invention.
Figure 2 - is the perspective view of the coffee maker and the dosing compartment when the transfer receptacle is in the transfer position related to an embodiment of the present invention.
Figure 3 - is the perspective view of the coffee maker and the dosing compartment when the transfer receptacle is in the transfer position related to an embodiment of the present invention.
Figure 4 - is the schematic view of the coffee maker when the transfer receptacle is in the transfer position related to an embodiment of the present invention.
Figure 5 - is the perspective view of the coffee maker and the dosing compartment when the lids are in the closed position related to an embodiment of the present invention.
Figure 6 - is the perspective view of the coffee maker and the dosing compartment when the transfer receptacle is in the transfer position related to an embodiment of the present invention.
Figure 7 - is the schematic view of the coffee maker when the transfer receptacle is in the transfer position related to an embodiment of the present invention.
Figure 8 - is the perspective view of the coffee maker and the dosing compartment when the lids are in the closed position related to an embodiment of the present invention.
Figure 9 - is the perspective view of the coffee maker and the dosing compartment when the transfer receptacle is in the transfer position related to an embodiment of the present invention.
Figure 10 - is the schematic view of the coffee maker when the transfer receptacle is in the transfer position related to an embodiment of the present invention.

The elements illustrated in the figures are numbered as follows:
1. Coffee maker
2. Body
3. Dosing compartment
4. Coffee receptacle
5. Brewing chamber
6. Transfer opening
7. Control unit
8. Lid
9. Transfer receptacle
10. Movement mechanism
11. Flexible member
12. Sugar receptacle
13. Electric motor
14. First movement arm
15. First gearwheel
16. Threaded rod
17. Transfer arm
18. Second movement arm
19. Second gearwheel
20. Threaded surface
21. Connection means
22. Guiding means
23. Coffee pot
Y. Horizontal plane
X. Vertical plane

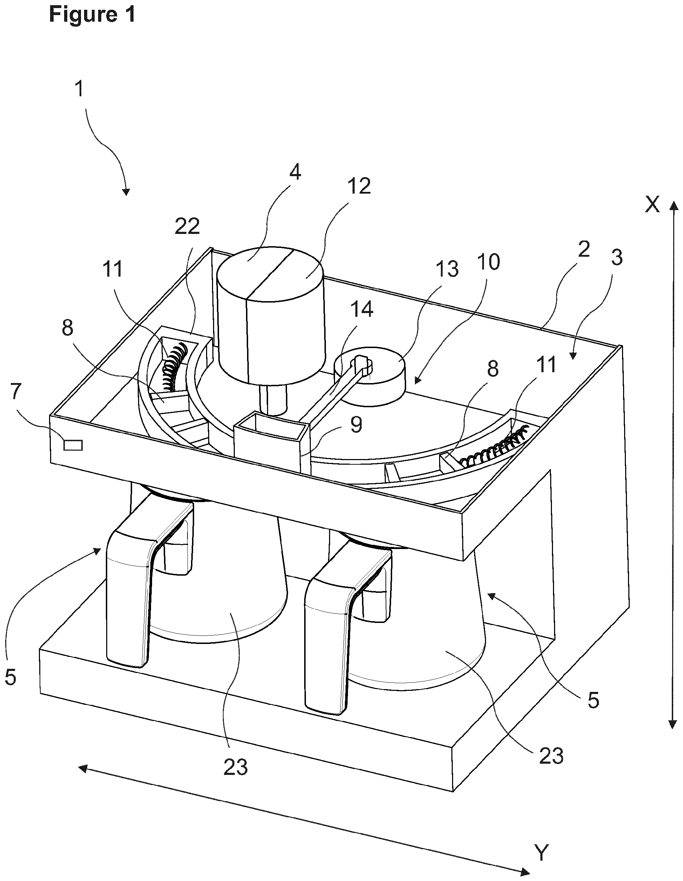

The coffee maker (1) comprises a body (2); a dosing compartment (3) which is disposed in the body (2); a coffee receptacle (4) which is disposed in the dosing compartment (3) and which is suitable for loading coffee; a brewing chamber (5) which is disposed in the body (2) and wherein the brewing process is performed; a transfer opening (6) which allows foodstuff transfer between the dosing compartment (3) and the brewing chamber (5); and a control unit (7) which controls the operation. As shown in Figure 1, the dosing compartment (3) is positioned above the brewing chamber (5). A dose of coffee appropriate to the amount of coffee selected by the user is transferred from the dosing compartment (3) to the brewing chamber (5) through the transfer opening (6).

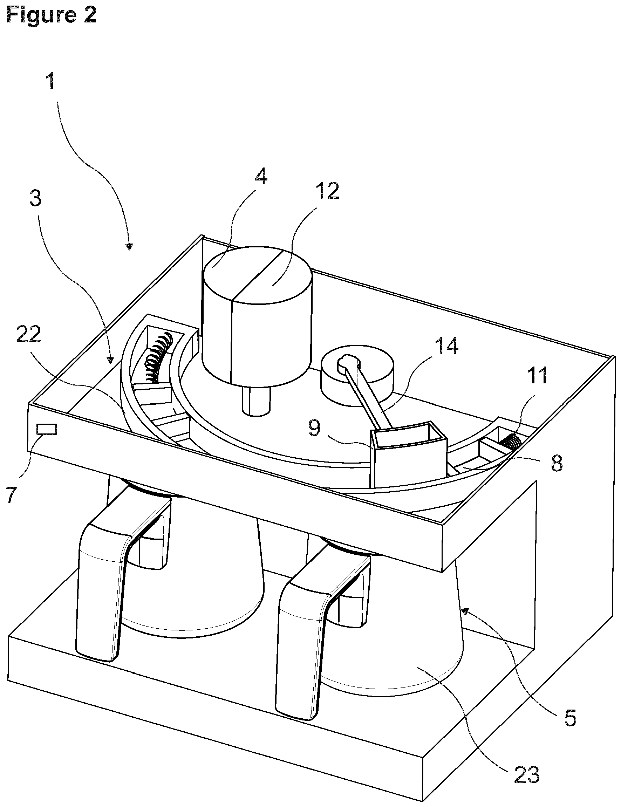

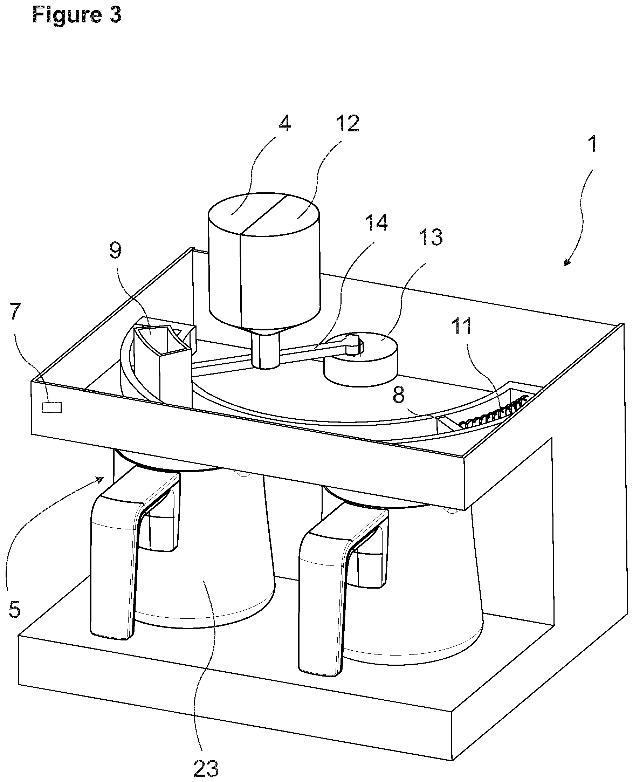

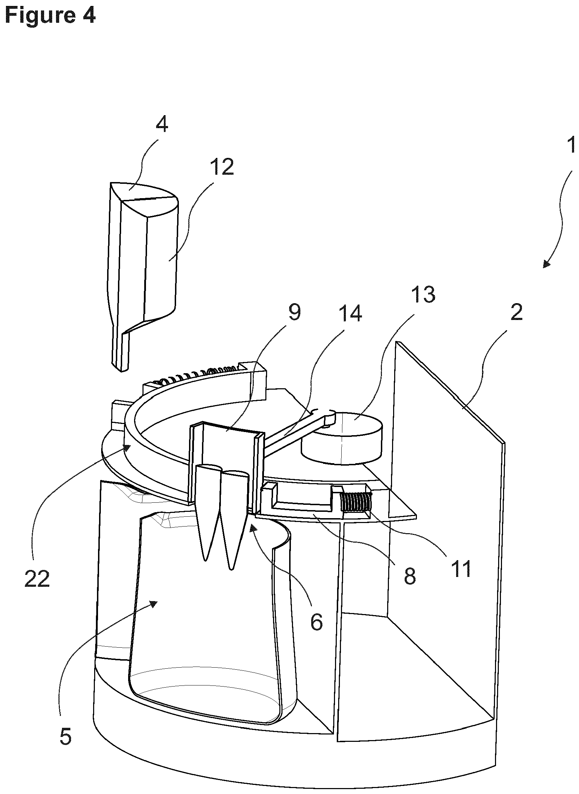

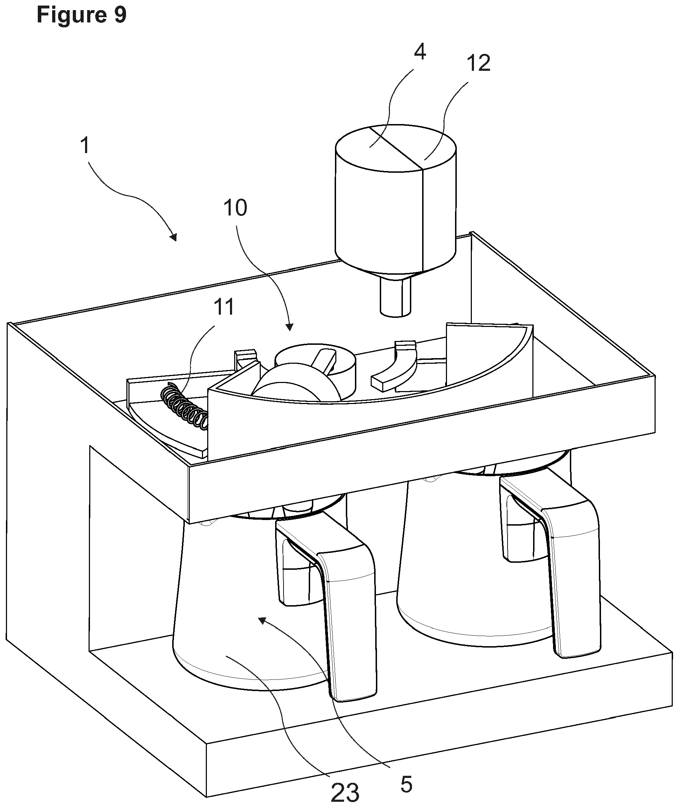

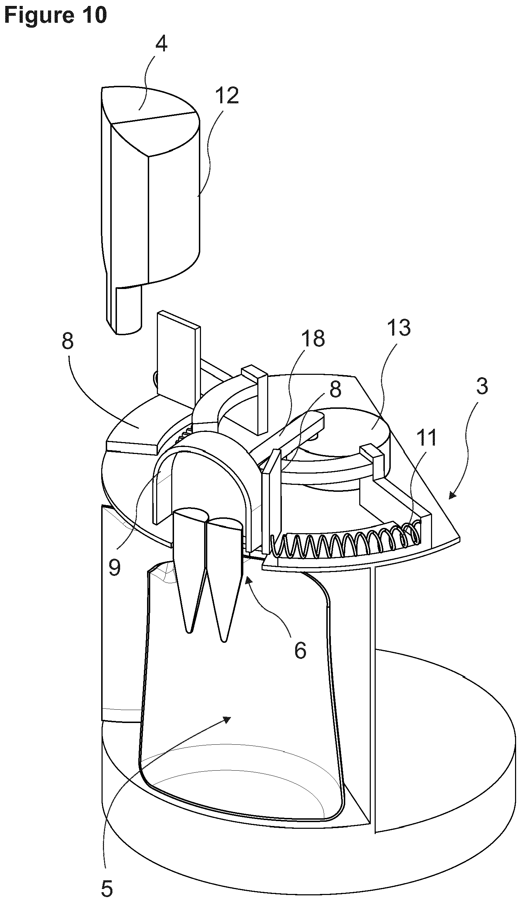

The coffee maker (1) of the present invention further comprises a transfer receptacle (9) which is disposed in the dosing compartment (3) and which is suitable for receiving the amount of coffee determined by the user from the coffee receptacle (4) by means of a first dosing mechanism; and a movement mechanism (10) which enables said transfer receptacle (9) to be brought to a transfer position where it is possible to transfer the coffee in the transfer receptacle (9) to the brewing chamber (5) through the transfer opening (6). In Figure 1, Figure 5 and Figure 8, the transfer receptacle (9) and the movement mechanism (10) are in the initial position. In the initial position, the transfer receptacle (9) is positioned under the coffee receptacle (4). In other words, in the initial position, the transfer receptacle (9) is positioned below the outlet port provided at the lower side of the coffee receptacle (4). Thus, the coffee leaving through the outlet port of the coffee receptacle (4) is transferred to the transfer receptacle (9) with the effect of gravity. The first dosing mechanism is provided in the coffee receptacle (4). The amount of coffee appropriate to the number of cups of coffee requested by the user via the input unit located on the body (2) is transferred from the coffee receptacle (4) to the transfer receptacle (9) by the first dosing mechanism. For example, when a single cup of coffee is requested by the user, a unit of coffee required to brew a cup of coffee is transferred to the transfer receptacle (9) by means of the first dosing mechanism. When two cups of coffee are requested by the user, two units of coffee are transferred from the coffee receptacle (4) to the transfer receptacle (9) by means of the first dosing mechanism. In an embodiment of the present invention, the first dosing mechanism comprises a helical rod. As shown in Figure 1, Figure 5 and Figure 8, the coffee receptacle (4) and the transfer opening (6) are disposed in the dosing compartment (3) at a distance from the horizontal plane (Y). The transfer receptacle (9) is shifted to the initial position and receives the coffee transferred from the coffee receptacle (4). After the coffee transfer from the coffee receptacle (4) to the transfer receptacle (9) is completed, the transfer receptacle (9) is moved towards the transfer opening (6) by means of the movement mechanism (10). As shown in Figures 3 and 4 as well as Figures 6 and 7, the transfer receptacle (9) is moved by the movement mechanism (10) towards the transfer position where communication with the transfer opening (6) is allowed in the horizontal plane (Y) in the dosing compartment (3). When the transfer receptacle (9) is in the transfer position, the transfer receptacle (9) and the brewing chamber (5) are in communication through the transfer opening (6). In other words, when the transfer receptacle (9) is shifted to the transfer position, the coffee in the transfer receptacle (9) can be transferred to the brewing chamber (5) through the transfer opening (6). In a version of the present invention, the opening is arranged on the surface of the transfer receptacle (9) facing the base of the dosing compartment (3). Thus, when the transfer receptacle (9) is moved to over the transfer opening (6), the coffee in the transfer receptacle (9) is transferred to the brewing chamber (5) through the transfer opening (6). In other words, in said embodiment of the present invention, when the opening provided on the surface of the transfer receptacle (9) facing the base of the dosing compartment (3) aligns with the transfer opening (6), the transfer receptacle (9) is in the transfer position. In Figures 2, 3, 4, 6, 7, 9 and 10, the transfer receptacle (9) is in the transfer position. The movement mechanism (10) moves the transfer receptacle (9) between the initial position and the transfer position. In other words, the movement mechanism (10) can move the transfer receptacle (9) in the dosing compartment (3) in both directions in the horizontal plane (Y). In a preferred version of the present invention, after the control unit (7) determines that the amount of coffee in the transfer receptacle (9) is transferred to the brewing chamber (5), the transfer receptacle (9) is returned to the initial position.

In an embodiment of the present invention, the coffee maker (1) comprises a lid (8) which is suitable to be moved between a closed position wherein the lid (8) closes the transfer opening (6) and an open position wherein the lid (8) allows foodstuff transfer between the dosing compartment (3) and the brewing chamber (5) through said transfer opening (6). When in the closed position, the lid (8) closes the transfer opening (6) so as to prevent any fluid or solid transfer between the dosing compartment (3) and the brewing chamber (5). When the lid (8) is in the open position, the transfer opening (6) is open to enable the coffee in the transfer receptacle (9) to be transferred to the brewing chamber (5). The lid (8) is disposed in the dosing compartment (3) so as to be moved between the open position and closed position. The lid (8) can be moved in the horizontal plane (Y) in the dosing compartment (3). When the transfer receptacle (9) is shifted to the transfer position by the movement mechanism (10), the lid (8) is in the open position. When the transfer receptacle (9) is in the initial position, the lid (8) is in the closed position. Thus, when the coffee maker (1) is not in use, the air is not allowed to enter the dosing compartment (3) through the transfer opening (6) and the coffee or other foodstuffs in the dosing compartment (3) are prevented from becoming stale. Moreover, undesirable substances such as dust, dirt or water are prevented from entering the dosing compartment (3).

In an embodiment of the present invention, the coffee maker (1) comprises the movement mechanism (10) which enables the lid (8) to be moved from the closed position to the open position while moving the transfer receptacle (9) to the transfer position. In the preferred version of the present invention, the lid (8) is in the open position only when the transfer receptacle (9) is in the transfer position. In other situations, the lid (8) is in the closed position. The lid (8) is configured to be moved in the horizontal plane (Y) in the dosing compartment (3). When the transfer receptacle (9) is moved towards the transfer opening (6), the lid (8) is pushed by the transfer receptacle (9) or the movement mechanism (10) so as to be moved from the closed position to the open position. Thus, the lid (8) is mechanically and automatically brought to the open position while the transfer receptacle (9) is brought to the transfer position.

In an embodiment of the present invention, the coffee maker (1) comprises a flexible member (11) which is connected to the lid (8) and which applies force to the lid (8) such that the lid (8) is brought to the closed position when the lid (8) is in the open position. The flexible member (11) applies force to the lid (8) in a direction which ensures that the lid (8) remains in the closed position when the lid (8) is in the closed position. While being shifted to the transfer position, the transfer receptacle (9) pushes the lid (8) with more force than the force applied by the flexible member (11) to the lid (8), thus shifting the lid (8) from the closed position to the open position. Since the transfer receptacle (9) does not apply any force on the lid (8) when shifted to the initial position, a force is applied to the lid (8) only by the flexible member (11). Thus, the lid (8) is enabled to remain in the closed position when the transfer receptacle (9) is not in the transfer position.

In an embodiment of the present invention, the coffee maker (1) comprises a sugar receptacle (12) which is disposed in the dosing compartment (3), which is suitable for receiving sugar, and which enables the amount of sugar determined by the user to be transferred to the transfer receptacle (9) by means of a second dosing mechanism. Thus, sugar is enabled to be stored in the coffee maker (1). The second dosing mechanism is provided in the sugar receptacle (12). The amount of sugar appropriate to the amount of sugar requested by the user via the input unit located on the body (2) is transferred from the sugar receptacle (12) to the transfer receptacle (9) by the second dosing mechanism. In the preferred version of the present invention, the sugar receptacle (12) is positioned in the dosing compartment (3) side by side with the coffee receptacle (4). Thus, when in the initial position, the transfer receptacle (9) is positioned under both the coffee receptacle (4) and the sugar receptacle (12). Thus, the desired dose of coffee and sugar is transferred to the transfer receptacle (9) when the transfer receptacle (9) is in the initial position.

In an embodiment of the present invention, the coffee maker (1) comprises the movement mechanism (10) comprising an electric motor (13). The electric motor (13) provides the actuation of the movement mechanism (10). The rotational axis of the electric motor (13) can be parallel to the vertical plane (X).

In an embodiment of the present invention, the coffee maker (1) comprises the movement mechanism (1) comprising a first movement arm (14) one end of which is connected to the electric motor (13) and the other end to the transfer receptacle (9), which enables the transfer receptacle (9) to be moved in the dosing compartment (3) with the rotation of the electric motor (13). Figure 1 to Figure 4 show the coffee maker (1) in the first embodiment of the present invention. In the first embodiment of the present invention, the electric motor (13) is rotated on a rotational axis parallel to the vertical plane (X) in the dosing compartment (3). The first movement arm (14) enables the transfer receptacle (9) to be moved to form a partial circle in the horizontal plane (Y) by the rotation of the electric motor (13). The lid (8) is positioned in the dosing compartment (3) so as to be moved in the same path that the first movement arm (14) is moved. When the electric motor (13) is rotated in one direction while the transfer receptacle (9) and the first movement arm (14) are in the initial position, the transfer receptacle (9) is moved towards the transfer opening (6) together with the first movement arm (14). While the transfer receptacle (9) shifts to the transfer position, the lid (8) is pushed by the transfer receptacle (9), ensuring that the transfer receptacle (9) and the transfer opening (6) are in communication. In Figures 2, 3 and 4, the transfer receptacle (9) is in the transfer position. After the control unit (7) determines that the coffee and/or sugar in the transfer receptacle (9) is transferred to the brewing chamber (5), the electric motor (13) is rotated in the other direction. Thus, the transfer receptacle (9) is moved from the transfer position to the initial position. Consequently, the coffee and/or sugar dosed in the amount desired by the user is automatically transferred to the brewing chamber (5) in a cost-efficient manner. While the transfer receptacle (9) shifts from the transfer position to the initial position, the lid (8) is brought from the open position to the closed position by means of the flexible member (11). By means of a coffee pot (23) placed in the brewing chamber (5), the brewing process can be performed in the coffee pot (23).

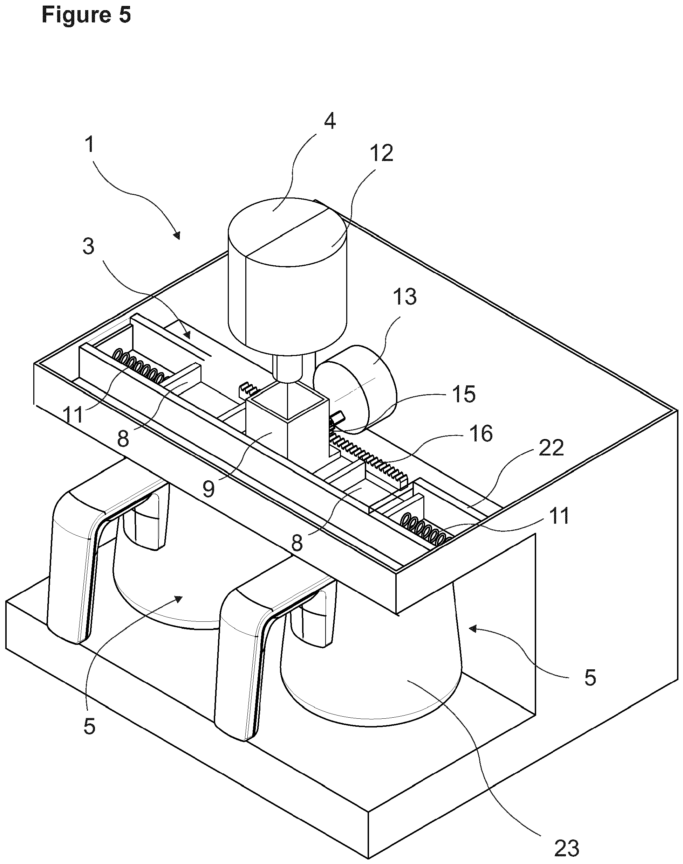

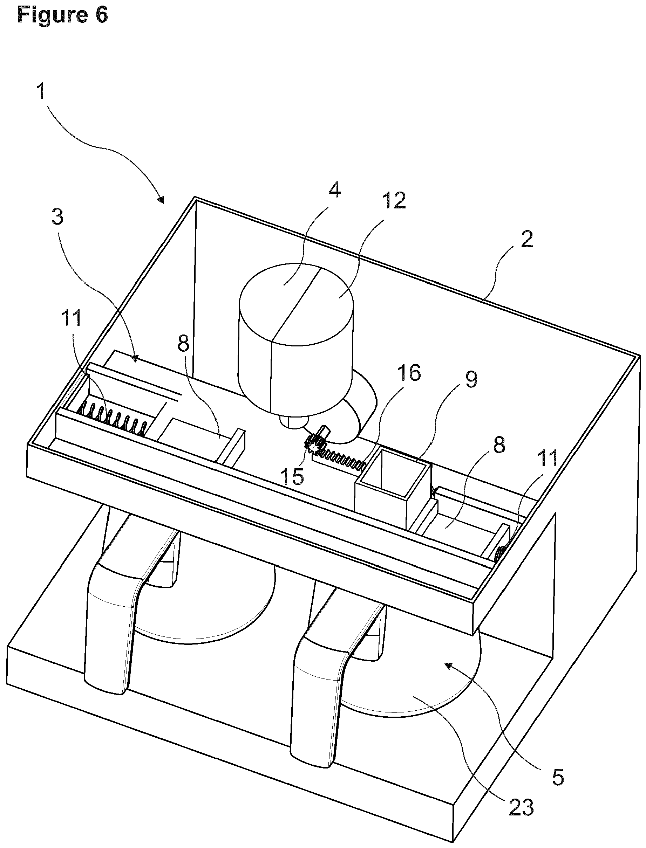

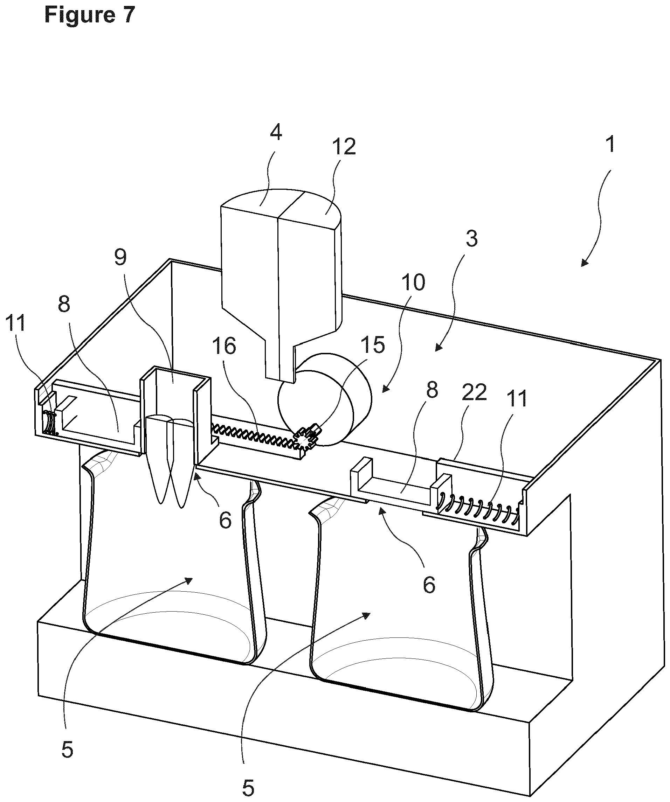

In an embodiment of the present invention, the coffee maker (1) comprises the movement mechanism (10) comprising a first gearwheel (15) which is connected to the electric motor (13) and which is suitable for rotational movement when the electric motor (13) is started; a threaded rod (16) which is connected to the first gearwheel (15) and which is suitable to be moved in a horizontal plane (Y) within the dosing compartment (3) by the rotation of the first gearwheel (15); and a transfer arm (17) one end of which is connected to the transfer receptacle (9) and the other end to the threaded rod (16) and which enables the transfer receptacle (9) together with the threaded rod (16) to be moved in the horizontal plane (Y). Figure 5 to Figure 7 show the coffee maker (1) in the second embodiment of the present invention. In the second embodiment of the present invention, the electric motor (13) is rotated around the rotational axis extending in a direction perpendicular to both the vertical plane (X) and the horizontal plane (Y). By the rotation of the electric motor (13), the first gearwheel (15) is rotated so as to be on the same rotational axis as the electric motor (13). The threaded rod (16) is connected to the first gearwheel (15) so as to be moved in a linear direction in the horizontal plane (Y). The transfer arm (17) extends between the transfer receptacle (9) and the threaded rod (16). The transfer receptacle (9) is moved linearly in the horizontal plane (9) together with the threaded rod (16). In Figure 5, the transfer receptacle (9) is in the initial position. By the rotation of the electric motor (13) in one direction, the threaded rod (16) is moved from the initial position to the transfer position in the dosing compartment (3). The lid (8) is positioned in the dosing compartment (3) so as to be moved in the same path that the threaded rod (16) is moved. While the transfer receptacle (9) shifts to the transfer position, the lid (8) is pushed by the transfer receptacle (9), ensuring that the transfer receptacle (9) and the transfer opening (6) are in communication. In Figures 6 and 7, the transfer receptacle (9) is in the transfer position. After the control unit (7) determines that the coffee and/or sugar in the transfer receptacle (9) is transferred to the brewing chamber (5), the electric motor (13) is rotated in the other direction. Thus, the transfer receptacle (9) is moved from the transfer position to the initial position. Consequently, the coffee and/or sugar dosed in the amount desired by the user is automatically transferred to the brewing chamber (5) in a cost-efficient manner. While the transfer receptacle (9) shifts from the transfer position to the initial position, the lid (8) is brought from the open position to the closed position by means of the flexible member (11).

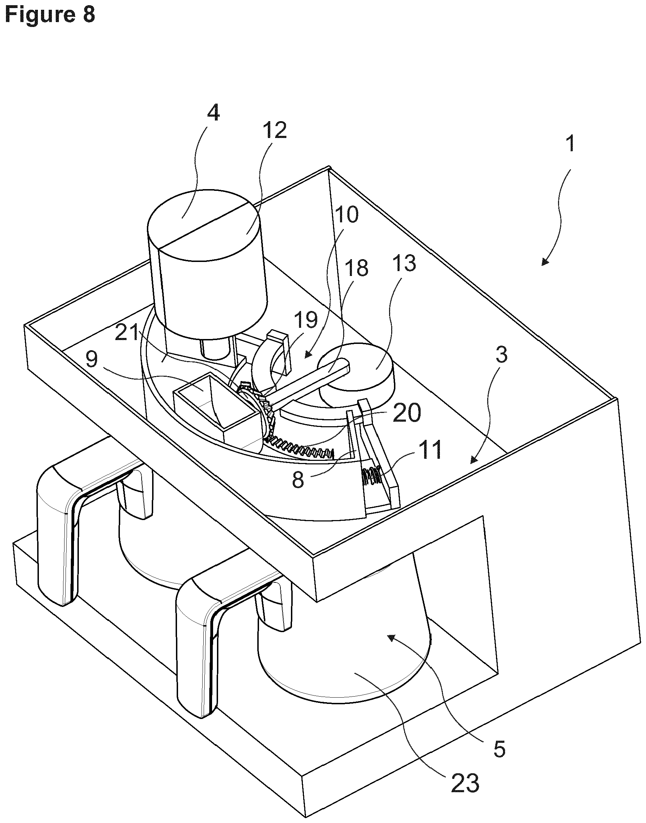

In an embodiment of the present invention, the coffee maker (1) comprises the movement mechanism (10) comprising a second movement arm (18) one end of which is connected to the electric motor (13) and which is suitable to be moved in a horizontal plane (Y) in the dosing compartment (3) by the rotation of the electric motor (13); a second gearwheel (19) which is disposed at the other end of the second movement arm (18) and which is suitable for rotational movement in the dosing compartment (3); a threaded surface (20) which is fixed in the dosing compartment (3) and which is suitable for rotating the second gearwheel (19) thereon; and a connection means (21) one end of which is connected to the transfer receptacle (9) and the other end to the second gearwheel (19) and which enables the transfer receptacle (9) together with the second gearwheel (19) to be rotated around its own axis and moved in the horizontal plane (Y). Figure 8 to Figure 10 show the coffee maker (1) in the third embodiment of the present invention. In the third embodiment of the present invention, the electric motor (13) is rotated on a rotational axis parallel to the vertical plane (X) in the dosing compartment (3). The second movement arm (18) enables the transfer receptacle (9) to be moved to form a partial circle in the horizontal plane (Y) by the rotation of the electric motor (13). At the other end of the second movement arm (18), there is the second gearwheel (19) which is suitable for being rotated around a rotational axis extending perpendicular to both the vertical plane (X) and the horizontal plane (Y). At the base of the dosing chamber (3), there is a threaded surface (20) which is suitable for rotating the second gearwheel (19). The threaded surface (20) is fixed at the base of the dosing chamber (3). By moving the second movement arm (18) in the horizontal plane (Y) by means of the electric motor (13), the second gearwheel (19) is rotated on the threaded surface (20). The transfer receptacle (9) is connected to the second gearwheel (19) via the connection means (21). The transfer receptacle (9) is rotated around its own axis together with the second gearwheel (19). The transfer receptacle (9) is moved in the horizontal plane (Y) by means of the second movement arm (18). In Figure 8, the transfer receptacle (9) is in the initial position. There is an opening on the upper surface of the transfer receptacle (9) facing the coffee receptacle (4) in the initial position. Through said opening, coffee is transferred from the coffee receptacle (4) to the transfer receptacle (9). The lower surface of the transfer receptacle (9) facing the base of the dosing compartment (3) is closed. While being moved towards the transfer position, the transfer receptacle (9) is moved both in the horizontal plane (Y) and rotated around its own axis. While the transfer receptacle (9) is moved towards the transfer position, the lid (8) is moved from the closed position to the open position by means of the second movement arm (18). The transfer receptacle (9) is rotated 180 degrees while being moved from the initial position to the transfer position. Thus, the opening on the transfer receptacle (9) and the transfer opening (6) are aligned. Consequently, the coffee and/or sugar in the transfer receptacle (9) is/are transferred to the brewing chamber (5).

In an embodiment of the present invention, the coffee maker (1) comprises a guiding means (22) which provides guidance for the movement of the transfer receptacle (9) and/or the lid (8) in the dosing compartment (3). In the first and third embodiments of the present invention, the guiding means (22) is in the form of a C. In the second embodiment of the present invention, the guiding means (22) extends linearly. Thus, the transfer receptacle (9) and/or the lid (8) is ensured to move only between the desired positions.

In an embodiment of the present invention, the coffee maker (1) comprises at least two brewing chambers (5) which are disposed in the body (2) with a distance therebetween relative to the horizontal plane (Y). A coffee pot (23) can be placed in each brewing chamber (5). A transfer opening (6) is provided above both brewing chambers (5). The transfer receptacle (9) can be moved in the dosing compartment (3) by the movement mechanism (10) so as to be aligned with both transfer openings (6).

In an embodiment of the present invention, the coffee maker (1) is a Turkish coffee maker.

By means of the present invention, a coffee maker (1) is realized, comprising a movement mechanism (10) which enables the appropriate amount of coffee to be automatically transferred to the brewing chamber (5) for the number of cups selected by the user, by means of a dosing mechanism (3).

## Claims

1. A coffee maker (1) **comprising** a body (2); a dosing compartment (3) which is disposed in the body (2); a coffee receptacle (4) which is disposed in the dosing compartment (3) and which is suitable for loading coffee; a brewing chamber (5) which is disposed in the body (2) and wherein the brewing process is performed; a transfer opening (6) which allows foodstuff transfer between the dosing compartment (3) and the brewing chamber (5); and a control unit (7) which controls the operation, **characterized by**
- a transfer receptacle (9) which is disposed in the dosing compartment (3) and which is suitable for receiving the amount of coffee determined by the user from the coffee receptacle (4) by means of a first dosing mechanism; and
- a movement mechanism (10) which enables said transfer receptacle (9) to be brought to a transfer position where it is possible to transfer the coffee in the transfer receptacle (9) to the brewing chamber (5) through the transfer opening (6).

2. A coffee maker (1) as in Claim 1, **characterized by** a lid (8) which is suitable to be moved between a closed position wherein the lid (8) closes the transfer opening (6) and an open position wherein the lid (8) allows foodstuff transfer between the dosing compartment (3) and the brewing chamber (5) through said transfer opening (6).

3. A coffee maker (1) as in Claim 2, **characterized by** the movement mechanism (10) which enables the lid (8) to be moved from the closed position to the open position while moving the transfer receptacle (9) to the transfer position.

4. A coffee maker (1) as in Claim 2 or 3, **characterized by** a flexible member (11) which is connected to the lid (8) and which applies force to the lid (8) such that the lid (8) is brought to the closed position when the lid (8) is in the open position.

5. A coffee maker (1) as in any one of the above claims, **characterized by** a sugar receptacle (12) which is disposed in the dosing compartment (3), which is suitable for receiving sugar, and which enables the amount of sugar determined by the user to be transferred to the transfer receptacle (9) by means of a second dosing mechanism.

6. A coffee maker (1) as in any one of the above claims, **characterized by** the movement mechanism (10) comprising an electric motor (13).

7. A coffee maker (1) as in Claim 6, **characterized by** the movement mechanism (1) comprising a first movement arm (14) one end of which is connected to the electric motor (13) and the other end to the transfer receptacle (9), which enables the transfer receptacle (9) to be moved in the dosing compartment (3) with the rotation of the electric motor (13).

8. A coffee maker (1) as in Claim 6, **characterized by** the movement mechanism (10) comprising a first gearwheel (15) which is connected to the electric motor (13) and which is suitable for rotational movement when the electric motor (13) is started; a threaded rod (16) which is connected to the first gearwheel (15) and which is suitable to be moved in a horizontal plane (Y) within the dosing compartment (3) by the rotation of the first gearwheel (15); and a transfer arm (17) one end of which is connected to the transfer receptacle (9) and the other end to the threaded rod (16) and which enables the transfer receptacle (9) together with the threaded rod (16) to be moved in the horizontal plane (Y).

9. A coffee maker (1) as in Claim 6, **characterized by** the movement mechanism (10) comprising a second movement arm (18) one end of which is connected to the electric motor (13) and which is suitable to be moved in a horizontal plane (Y) in the dosing compartment (3) by the rotation of the electric motor (13); a second gearwheel (19) which is disposed at the other end of the second movement arm (18) and which is suitable for rotational movement in the dosing compartment (3); a threaded surface (20) which is fixed in the dosing compartment (3) and which is suitable for rotating the second gearwheel (19) thereon; and a connection means (21) one end of which is connected to the transfer receptacle (9) and the other end to the second gearwheel (19) and which enables the transfer receptacle (9) together with the second gearwheel (19) to be rotated around its own axis and moved in the horizontal plane (Y).

10. A coffee maker (1) as in any of the above claims, **characterized by** a guiding means (22) which provides guidance for the movement of the transfer receptacle (9) and/or the lid (8) in the dosing compartment (3).

11. A coffee maker (1) as in any one of the above claims, **characterized by** at least two brewing chambers (5) which are disposed in the body (2) with a distance therebetween relative to the horizontal plane (Y).

12. A coffee maker (1) as in any one of the above claims, which is a Turkish coffee maker.
